# EUROPEAN PATENT SPECIFICATION

(11) **EP 2 355 483 B1**
(45) Date of publication and mention of the grant of the patent: **20.06.2018**
(21) Application number: 11425002.0
(22) Date of filing: 11.01.2011
(51) Int. Cl.: H04N 1/028, H04N 1/191, H04N 1/00, H04N 1/03

(54) **Illuminating device for image digitization scanners.**
Belichtungseinrichtung für Bild-Digitalisierungsscannergeräte.
Dispositif d'éclairage pour un lecteur optique d'images.

(30) Priority: 12.01.2010 IT RM20100006
(43) Date of publication of application: 10.08.2011
(73) Proprietor: Colagrande, Silvia, 00163 Roma (IT); Colagrande, Massimo, 00163 Roma (IT); Colagrande, Lorenzo, 00163 Roma (IT)
(72) Inventor: Colagrande, Silvia, 00163 Roma (IT); Colagrande, Massimo, 00163 Roma (IT); Colagrande, Lorenzo, 00163 Roma (IT)
(74) Representative: Cardelli, Guido

(56) References cited:
- US-A- 4 248 517
- US-A1- 2006 215 238
- US-A1- 2008 029 687
- US-A1- 2009 310 344
- US-B1- 6 507 416

## Description

### Field of the invention

The present invention relates to an illuminating device for image digitization scanners. The invention applies to image digitizing scanners based on one or more linear or multilinear sensors, even if consisting of multiple sensors or in the case of staggered sensors, in which the scanning process takes place through linear motion of the sensor and / or the object to be digitized and / or the components in the optical axis of the scanner and / or the illuminating system. The present invention is applicable to image digitizing scanners in which the illumination is focused on the portion of the object to be digitized, said portion being visible to the image sensor and then concentrated on a generally linear region of the acquisition surface corresponding to the acquisition line or lines of the sensor. The present invention is applicable to image digitization scanners in which, during scanning, the illumination system and the object to be digitized are moved with respect to each other so that one linear portion at a time of the object to be digitized lies in the active scanning area and, therefore, becomes visible to the image sensor according to the adopted illumination scheme. The active scanning area is defined as that part of the scanning plane having a generally linear conformation corresponding to the acquisition line or lines of the sensor. The active scanning area is determined by the intersection between a plane containing the optical axis of the scanner and a scanning plane in which the object to be digitized lies during the scanning process. The optical system of the scanner is usually constituted by a lens adapted to focus the image from the scanning area to the image sensor. The optical system is often composed of additional elements such as lenses and / or prisms and / or mirrors, all being arranged in series and / or in parallel. Document US6507416, for example, discloses a scanner's illumination using a dimmer to change the light's intensity.

### State of art

Generally, a linear or a multilinear sensor or a sensor consisting of multiple sensors can be used in the scanning process, and the illuminating system in a image digitizing scanner is composed of one or, more frequently, two light sources that are placed symmetrically with respect to the plane containing the optical axis, i.e. a light source for each side. The two sides of the object to be digitized are determined by the intersection between the plane containing the optical axis and the scanning plane. In the image digitization scanners the light sources can be arranged in several ways. One possible arrangement provides that the light sources are oriented directly towards the scanning area; another possible arrangement, however, provides that a diffusion filter is placed in front of the light sources in order to make the illumination more uniform and create a wider field of light; another possible arrangement is one where positioned in front of the light sources are lenses adapted to focus the light in the scanning area in order to increase the overall brightness and / or to allow the light source to be moved away from the scanning area; further the light sources can be oriented to a conical reflector which in turn focuses or scatters light in the scanning area in order to increase brightness and uniformity of illumination.
In the state of art, the nature of light sources and the way they are arranged with respect to the active scanning area determines in the active scanning area a particular spatial distribution of light characterised by light beams falling on the active scanning area. Consequently, a given configuration of intensity and angle of light beams falling on the scanning area characterises a particular configuration of the illuminating system. The lighting configurations implemented in different prior art image scanners are generally very different from one another as the needs of reproduction vary according to application fields and types of objects to be digitized.

### Limitations of prior art systems

The commercially available scanning systems for image digitization often incorporate a fixed lighting configuration, with an angle of incidence of the light beams that is not variable, that can not allow any real optimisation of scanned objects with different characteristics.

In the very few scanning systems in which the lighting configurations and, in particular, the angle of incidence of light beams can be changed, this feature is implemented in ways that limit the performance and the level of automation thereof.

A first implementing way in the prior art is to provide a scanner with an independent control system to switch on and off the light sources; the light sources being always one or up to two for each side and then with a maximum of four independent sources distributed symmetrically to the optical axis. In these scanners light sources can only be switched on or off. The different lighting configurations and, in particular, the different angles of incidence of the light beams that can be obtained with these scanners are thus very limited. In particular, with two light sources only three different configurations of light can be obtained, and with four light sources only fifteen different configurations are available. In addition, in these scanners the switching of the light sources is carried out manually by one or more electromechanical switches or selectors. The manual intervention required to change the configuration of lighting causes, therefore, severe limitations because it does not allow high degrees of automation, repeatability and speed of operation.

A second implementing way in the prior art is to provide the scanner with a mechanism whereby the physical displacement and / or rotation of the light sources is performed with respect to the scanning area, the light sources being often composed of multiple lamps and being always one for each side, being arranged symmetrically to the optical axis. In these scanners, the rotation and / or displacement control is limited to the control of a single light source for each side. Although in some of these scanners the intensity of the two different light sources can also be modulated independently, the variation of the lighting configurations and, in particular, of the angles of incidence of light beams on one side of the object to be digitized exclusively occurs through physical displacement and / or rotation of the light sources. In such scanners the change in brightness or dimming is used solely to control the intensity of illumination on the opposite sides of the object to be digitized, and the control of the angles of incidence of the light beams occurs by rotating and / or shifting the corresponding light source. In addition, the lighting configurations and, in particular, the angles of incidence of light beams that can be obtained by rotation and / or displacement of the light sources are limited because, for example, the angle of incidence of individual beams of light cannot be changed but only the entire set of light beams can be shifted or rotated simultaneously. Moreover, in these scanners, the light sources cannot be removed from or approached to the scanning area, except for minor variations, and therefore the width of the set of light beams cannot be expanded or reduced with respect to the scanning area. Furthermore, even when the rotation and / or displacement of the illuminating systems is powered, a time longer than several seconds is requested for changing the angle of incidence of light and therefore a high degree of automation and speed of operation cannot be achieved.

A third implementing way in the prior art, even in combination with the previous ones, is to allow optical elements such as filters, benders, grids to be inserted on the front of the illuminating system of the scanner in order to obtain different lighting configurations. In particular, it is necessary to use different filters, benders, grids for each specific and different lighting configuration. Thus in these scanners the different lighting configurations and, in particular, ranges of angles of light that can be obtained are very few because manufacturers generally make only two or three different accessories for the light even in order to contain costs and managing complexity of the system. In addition, in these scanners there are severe limitations as a time longer than several seconds is requested for enabling / disabling filters, benders and grids in the illuminating system and, therefore, a high degree of automation and speed of operation cannot be achieved.

In addition, other limitations of the known systems are forced: i) by the time requested for varying lighting configurations and, in particular, the angles of incidence of the light beams, which takes several seconds; ii) by the fact that it is not possible to compare quickly in scanning tests the different lighting solutions in order to choose the best solution in relation to a particular object, as it is extremely difficult without scanning tests to foresee the kind of result that can be achieved by applying a specific lighting configuration in a final scanning; iii) by the fact that the current solutions lack precision and repeatability due to the mechanical operations necessary to obtain the variation of the angles of light; iv) by the fact that the mechanical solutions with higher precision are more costly and more likely to fail.

In a recent patent search provided by EPO in response to a corresponding Italian patent application relating to the subject-matter of the present invention has been cited U.S. patent 4,248,517 that describes an illuminating device for use in a copying apparatus comprising a fluorescent lamp with an elongated tube and a slit through which light emitted from the lamp is directed to a document to be scanned; a dimmer circuit connected to the fluorescent lamp for adjusting an amount of light emitted from the lamp; and a mask arranged around the fluorescent lamp at least adjacent thereto and having adjacent openings. U.S. patent 4,248,517 teaches that a dimmer circuit able to adjust manually or automatically a lamp can be used to scan an image.

In the same patent search the patent application U.S. 2008/0029687 was mentioned, which describes an image reading apparatus, comprising among other things not less than four light sources, each with an emission spectrum different from the others, and an emission control unit. Essentially, U.S. 2008/0029687 claims four or more LED light sources, each having different spectral emission characteristics, i.e. a different colour of the light. Finally, in a scanner in which it is necessary to illuminate the object to be scanned alternatively with Red, Green and then Blue light to obtain a colour image, U.S. 2008/0029687 proposes to use four or five LEDs by mixing the light thereof to obtain in three different times an emission such as "Red", "Green", "Blue" closer to the reference colour models. Therefore, U.S. 2008/0029687 concerns the mixing of the colour of the light of four or five LEDs in order to obtain three spectral ranges of emission more optimised than those that can be obtained with three RGB LEDs, and hence reduce the error in colour reproduction.

Both cited patents are deemed not relevant to the subject-matter of the present invention because they does not provide, as discussed below for the present invention, the use of the change in light intensity in order to vary the angle of incidence of the light rays in the active scanning area.

US 2006/0215238 describes a device including two lighting units illuminating an object at different incident angles, an image-input unit that receives light and generates image signals in accordance with the received light; and a guiding unit that guides light diffusely reflected from the object illuminated by either the first or second lighting units to the image-input unit. In US 2006/0215238 the two lighting units work alternatively and the intensity of their light are not modulated.

### Summary of the invention

The implementation of the present invention was inspired by the study and the results obtained by testing the latest generation of professional LEDs applied to issues of lighting control previously described. LED technology makes it possible to achieve a superior ability to modulate the intensity of light by electronic dimming. In particular, the test showed that some types of LEDs of the latest generation offer an ability to vary almost instantly the intensity of light by about 10% to more than 120% of rated power and go from off- to on-state in fractions of a second.

The present invention, which aims to solve the problems described in the state of art, is defined in claim 1 and in the claims dependent thereon, in connection with its preferred embodiments.

In all embodiments, by applying the independent dimming of individual light sources, a superior ability to obtain different lighting configurations in the scanning area over the state of the art was achieved.

Furthermore, the invention provides to a scanner, which is applied to, both high flexibility and adaptability to many different types of originals to be digitized, in virtue of its superior ability to modulate the angles of incidence of light beams, and a high level of automation thanks to its ability to vary the lighting configuration almost instantly.

The present invention also achieves a high ability to vary extremely quickly the angles of incidence of light beams in the scanning area. Moreover, the intensity modulation of light sources can also be done via software control as well as manually, with the consequence of eliminating the problems of accuracy and repeatability in the state of art. Furthermore, the control by software allows switching of the light configuration and a highest degree of automation, allowing, among other things, to test several different lighting ways in shortest time and fully automatically. Last but not least, since mechanical parts designed to move the light sources are no longer necessary, there is a considerable reduction in production costs of the scanners which the present invention is applied to, and the elimination of the problems of mechanical wear.

The invention also applies to types of illumination different from LEDs. The present invention therefore can also be made using light sources like CCFL or EEFL or OLED or Xenon, even if with a reduced dimming capability.

The present invention will be better understood from the description of its preferred embodiments considered in conjunction with the accompanying drawings.

### Brief description of figures

Figure 1 shows a schematic isometric view of a first embodiment of the illuminating device according to the invention comprising four light sources placed symmetrically in spaces delimited by the scanning plane that is defined by the object to be scanned, and a plane orthogonal to it containing the optical axis.
Figure 2 shows a schematic cross-section of a second embodiment of the illuminating device according to the invention where four light sources are combined with a diffusion filter.
Figure 3 shows a schematic cross-section of a third embodiment of the illuminating device according to the invention where there are two light sources in one space delimited by the scanning plane and a plane that is inclined with respect to it and contains the optical axis.
Figure 4 shows a schematic cross-section of a fourth embodiment of the illuminating device according to the invention with six light sources, a mirror being inserted in the optical axis to convey the image to the sensor.
Figure 5 shows a schematic cross-section of a fifth embodiment of the illuminating device according to the invention where four light sources are each oriented towards a corresponding cylindrical lens.
Figure 6 shows a schematic cross-section of a sixth embodiment of the illuminating device according to the invention where four light sources are individually oriented toward a distinct portion of an elliptical reflector.

### Detailed description of the invention

In all embodiments of the invention described below it permits the light beams emitted from light sources to be combined in many different ways through independent dimming by using a device capable of controlling light intensity.

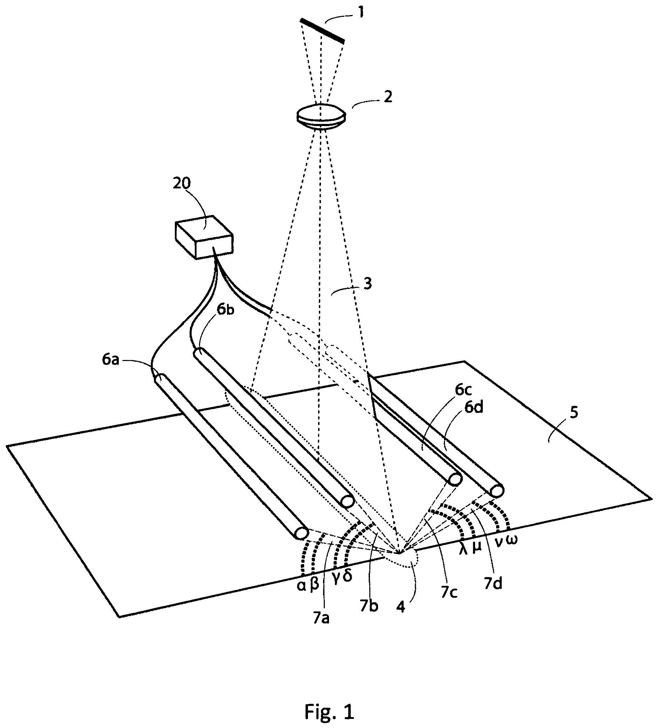

A first preferred embodiment is exemplified in Figure 1, which shows in a schematic isometric view an illuminating device according to the invention comprising four light sources 6a, 6b, 6c, 6d placed symmetrically in spaces delimited by the scanning plane, which is defined by the object 5 to be scanned, and a plane that is orthogonal thereto and contains the optical axis 3. A sensor is indicated as 1 and an optical system for scanning is denoted as 2, both being not better specified. The present invention makes it possible to combine light emitted from the four light sources 6a, 6b, 6c, 6d with four corresponding incident light beams 7a, 7b, 7c, 7d that are formed by a set of incident rays, each of them falling on the active scanning area 4 with respective angles of incidence. Each light beam, e.g. 7a, may be discontinuous and in turn the set of the angles of incident light rays falling on the active scanning area 4 may be discontinuous. The incident light beams 7a, 7b, 7c and 7d, are determined by light rays with an intensity greater than a certain threshold. The beams of light, then, are delimited by incident light rays falling on the active scanning area 4 and defined by angles α, β, γ, δ that are measured clockwise with respect to the scanning plane containing the object 5 to be scanned, and angles λ, µ, v, ω that are measured counter-clockwise with respect to the same scanning plane.

This embodiment of the invention provides that the light sources 6a, 6b, 6c, 6d, are arranged symmetrically with respect to the plane containing the optical axis 3 in order to allow independent control of light on two sides of the object 5 to be scanned. The purpose of this symmetrical arrangement of light sources 6a, 6b, 6c, 6d, is to provide different configurations of the sets of light beams in which the light is balanced on both sides of the object 5 to be scanned in order to limit the creation of shadows and / or effects of oblique light when a high uniformity of illumination is required. The light sources 6a, 6b, 6c, 6d, are each formed by a group of LEDs with dimming capability. Each LED group is composed of the same number of LEDs being arranged in a line and spaced a few inches apart, so that the final length of the LED group is approximately equal to the surface to be illuminated and, therefore, is about equal in length to the size of the active scanning area 4. Each group of LEDs is oriented parallel to the active scanning area 4. The illuminating device according to the present invention is able to modulate independently the light intensity of each LED group and, therefore, every single light source through independent dimming controlled by an apparatus 20 adapted to modulate their light intensity. The dimmer apparatus 20 is controlled by software on a scale of increments that allows discrete changes in light intensity. In fact, an increase of about one percent in the rated light intensity permits to achieve even millions of combinations of the four light sources. The dimming of the different groups of LED is controlled by an acquisition software to optimise, accelerate and simplify operations and enable automatically a test of multiple different lighting configurations.

It should be understood that, by maintaining a constant position of the light sources, the distribution of the light on the active scanning area 4 depends only on the intensity planned for each light source. In fact, by changing the intensity of various light sources, their light beams vary and, therefore, proportionally also the combination of the different angles of incidence of light rays on the object 5 to be scanned varies.

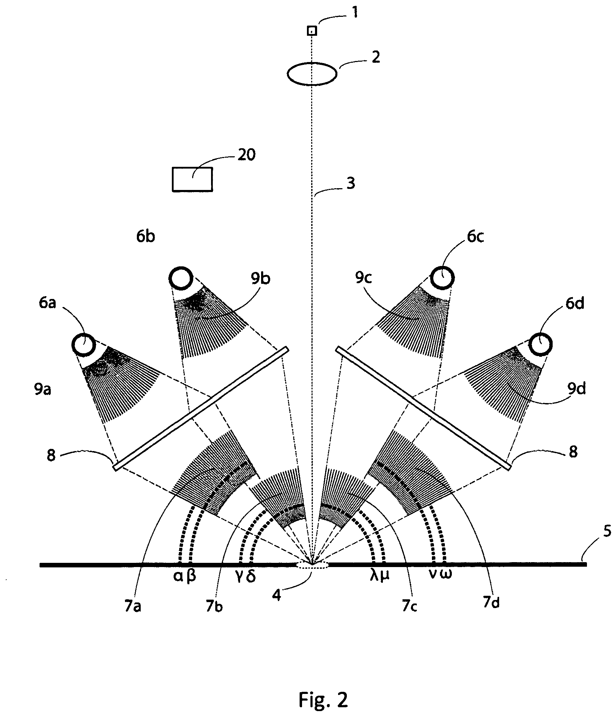

In a second embodiment of the present invention exemplified in Figure 2 and in the following ones, the same reference numerals in the Figure 1 are used to indicate equal or similar parts. Figure 2 shows a schematic cross-section of the illuminating device where four light sources 6a, 6b, 6c, 6d, are combined with a diffusion filter 8. In this second embodiment of the invention, the diffusion filter 8 is inserted into the optical path of light emitted by the four light sources 6a, 6b, 6c, 6d, so as to intercept, on distinct portions of the surface of the diffusion filter 8, the possibly overlapping emitted light beams 9a, 9b, 9c, 9d, from different sources, so that the diffusion filter 8 reflects to the active scanning area 4 the required incident light beams 7a, 7b, 7c, 7d, being defined by their angles α, β, γ, δ, that are measured clockwise with respect to the scanning plane containing the object 5 to be scanned, and λ, µ, ν, ω, that are measured counter-clockwise from the same scanning plane. The use of the filter 8 provides a more uniform distribution of light in the active scanning area 4 but, more importantly, allows to obtain some angles of incidence of light beams that are not otherwise covered by the LEDs through direct illumination. A slight overlap of the emitted light beams 9a, 9b, 9c, 9d, on the diffusion filter 8, as shown in Figure 2, further assures an optimal result in many applications.

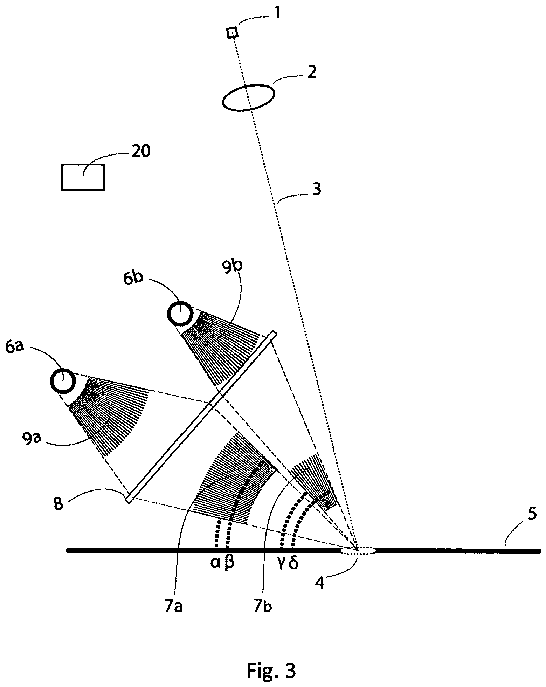

A third embodiment of the present invention is exemplified in Figure 3, which shows a schematic cross-section of the illuminating device according to the invention where there are two light sources 6a, 6b in one space delimited by the scanning plane and a plane that is inclined with respect to the latter and contains the optical axis 3.

Through independent dimming controlled by the apparatus 20, the light beams 9a, 9b that are emitted by the two light sources 6a, 6b, through the diffusion filter 8, are transformed into the corresponding incident light beams 7a, 7b, being defined by their angles α, β, and γ, δ, that are measured clockwise from the scanning plane. This third embodiment of the invention is particularly useful when structural constraints or limitations connected to the nature of the object to be digitized do not allow a symmetrical arrangement of light or when multiple configurations of oblique light are requested. Moreover, in this embodiment, the optical axis 3 is not perpendicular to the scanning motion and, therefore, to the object 5 to be scanned. Furthermore, the resulting incidence angles α, β, and γ, δ, of the two light sources 6a, 6b have different width than the first two embodiments of Figures 1 and 2. This third embodiment shows the ability to create specific configurations of light obtained by combining broad and narrow ranges of angles.

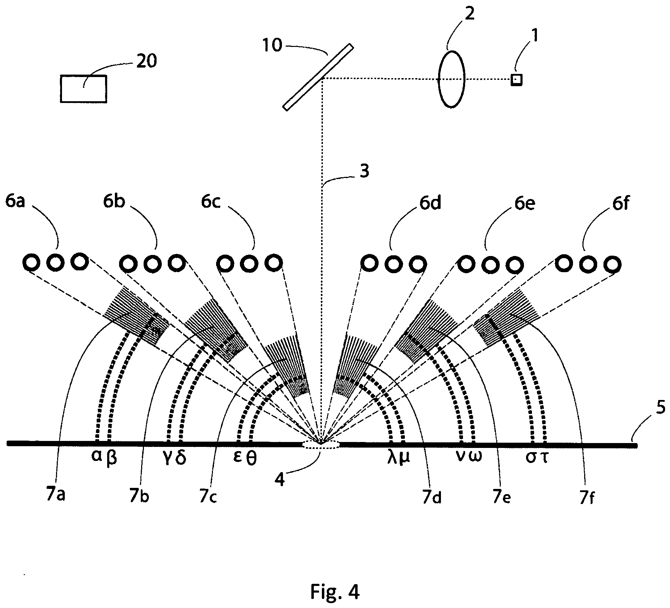

A fourth embodiment of the present invention is exemplified in Figure 4, which shows a schematic cross-section of the illuminating device with six light sources 6a, 6b, 6c, 6d, 6e, 6f, a mirror 10 being inserted in the optical 3 adapted to convey the image to the sensor 1. The light is emitted from the six light sources 6a, 6b, 6c, 6d, 6e, 6f, in the corresponding six incident beams 7a, 7b, 7c, 7d, 7e, 7f, that are formed by a set of rays each falling on the active scanning area 4 with respective angles of incidence. The light beams then are delimited by light rays falling on the active scanning area 4 and defined by angles α, β, γ, δ, ε, θ that are measured clockwise with respect to the scanning plane containing the object 5 to be scanned, and λ, µ, ν, ω, σ, τ that are measured counter-clockwise from the same scanning plane. In this fourth embodiment of the invention, the light sources 6a, 6b, 6c, 6d, 6e, 6f, are each composed of three groups of LEDs side by side so that the ranges of emission from the individual light sources result expanded as a consequence. The distance between the light sources 6a, 6b, 6c, 6d, 6e, 6f, and the active scanning area 4 is not the same. This embodiment, although it provides a less uniform illumination with respect to the previous ones of Figures 1, 2 and 3, however can achieve a higher level of brightness in the active scanning area 4 thanks to the fact that the distance between the light sources 6a, 6b, 6c, 6d, 6e, 6f, and the active scanning area 4 is reduced to the minimum distance allowed between the overall size of the illumination device and the object 5 to be scanned. In addition, the optical axis 3 is characterised by the presence of a mirror 10 adapted to deflect the optical path of the image from the active scanning area 4 to the sensor 1.

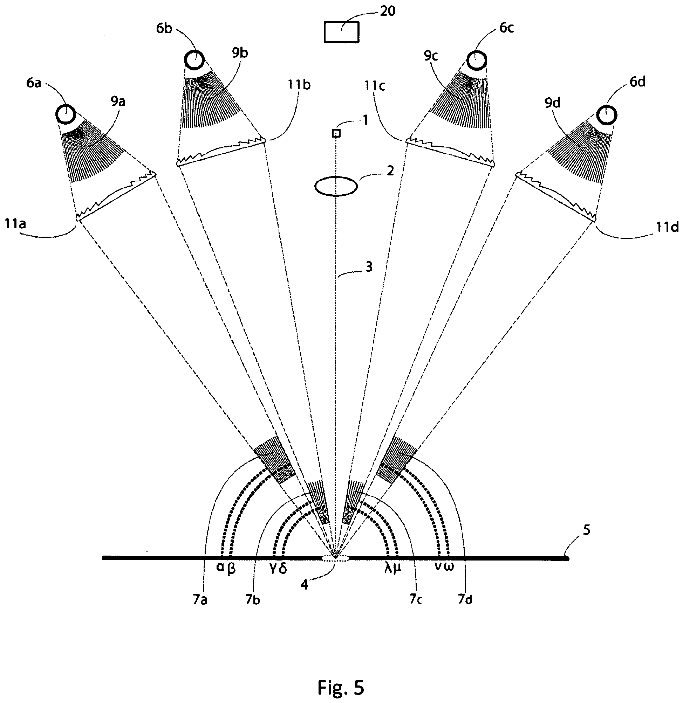

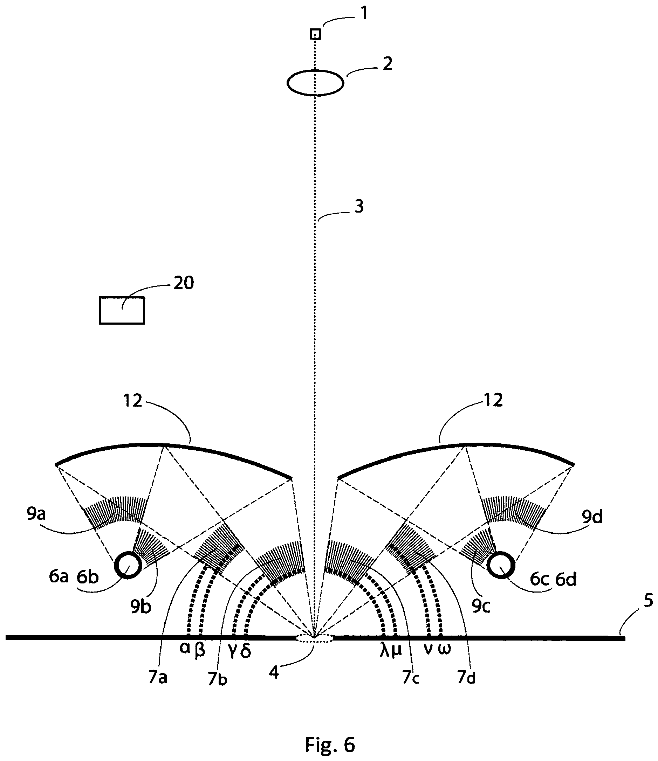

A fifth embodiment of the present invention is exemplified in Figure 5, which shows a schematic cross-section of the illuminating device according to the invention where four light sources 6a, 6b, 6c, 6d, are each oriented toward a corresponding cylindrical lens 11a, 11b, 11c, 11d. The light is emitted from the four light sources 6a, 6b, 6c, 6d, in four corresponding incident light beams 7a, 7b, 7c, 7d, on the active scanning area 4 that are defined by the respective angles α, β, γ, δ, that are measured clockwise with respect to the scanning plane containing the object 5 to be scanned, and λ, µ, ν, ω measured counter-clockwise from the same scanning plane. In this embodiment of the present invention, cylindrical fresnel lenses 11a, 11b, 11c, 11d, are inserted in order to concentrate the light beams 9a, 9b, 9c, 9d, emitted by different light sources 6a, 6b, 6c, 6d, at different incident light beams 7a, 7b, 7c, 7d, on the active scanning area 4. The use of fresnel lenses 11a, 11b, 11c, 11d, permits to achieve many advantages such as e.g. the possibility of removing the light sources 6a, 6b, 6c, 6d, from active scanning area 4 to meet particular constraints of construction and / or use. In addition, the use of fresnel lenses can focus more light in the active scanning area 4, and get then a higher level of brightness and also more extensive incident light beams 7a, 7b, 7c, 7d, on the active scanning area 4 thanks to the greater area of the emission surface of the light created by the lenses.
A sixth embodiment of the present invention is exemplified in Figure 6, which shows a schematic cross-section of the illuminating device according to the invention where four light sources 6a, 6b, 6c, 6d, are each oriented toward a distinct portion of an elliptical reflector generically indicated as 12. In this embodiment of the present invention, the elliptical reflectors 12 are inserted in the optical path of light emitted by the four light sources 6a, 6b, 6c, 6d, that are concentrically arranged in pairs, so as to intercept on also overlapping different portions of the surface of the reflectors 12, the light beams 9a, 9b, 9c, 9d, emitted from different sources 6a, 6b, 6c, 6d, and so that each reflector 12 returns and focuses in the active scanning area 4 the light in incident light beams 7a, 7b, 7c, 7d, defined by their angles α, β, γ, δ, that are measured clockwise from the scanning plane containing the object 5 to be scanned, and λ, µ, ν, ω measured counter-clockwise from the same scanning plane, as required. This embodiment allows to remove the light sources 6a, 6b, 6c, 6d, from the active scanning area 4 and / or to concentrate a greater amount of light in the active scanning area 4. It also allows to expand the light beams emitted by the individual light sources 6a, 6b, 6c, 6d, and get wider spreader incident light beams 7a, 7b, 7c, 7d. Each elliptical reflector 12 is positioned on each side of the illuminating system, so that the light sources 6a, 6b or 6c, 6d, corresponding to that particular side, are placed in the first focus of the ellipse that is formed by the reflector 12. In addition, the reflector 12 is oriented so that the second focus of the ellipse is right in the active scanning area 4. This arrangement of the elliptical reflector 12 determines the concentration of the light emitted by light sources 6a, 6b, 6c, 6d, in the active scanning area 4. The emissions of light sources 6a, 6b or 6c, 6d are oriented on different portions of the elliptical reflectors 12 in order to obtain incident light beams 7a, 7b, 7c, 7d, in the active scanning area 4 for each of the sources lights. It is thus created one group of LEDs on each side of the illuminating system, alternating on the same line LEDs belonging to a light source 6a or 6c with those of another light source 6b or 6d. This arrangement on a single line is needed in order to keep all light sources 6a, 6b, and 6c, 6d in the first focus of the elliptical reflector 12. The LEDs of each pair of light sources 6a, 6b, and 6c, 6d, therefore, are oriented alternatively toward either distinct portions of the reflector 12 so as to create distinct emission beams 9a, 9b, and 9c, 9d, that are also partially overlapped. In a further embodiment not shown, an independent control of the intensity of light is implemented at different portions of the same light source, such as on separate areas of the same group of LEDs that is one of the light sources. This provides a further possibility of light selecting and controlling.

## Claims

1. An illuminating device for image digitization scanners that are provided with at least a linear or multilinear sensor (1) and an optical system (2) with its optical axis (3), the device comprising a first light source (6a) composed of LEDs and at least a second light source (6b) composed of LEDs, which are located in a space delimited by a scanning plane being defined by the object (5) to be scanned and by a plane containing the optical axis (3), so as to emit incident light beams (7a, 7b) formed by a set of rays falling on an active scanning area (4) of the scanning plane with given angles of incidence, the first light source (6a) being controlled by a dimmer apparatus (20) which modulates the light intensity of the first light source (6a), **characterised in that** said at least second light source (6b) is controlled by said dimmer apparatus (20) so that multiple different lighting configurations in the active scanning area (4) are achieved by modulation of the intensity of light from at least the two light sources (6a, 6b) by applying combined independent dimming of individual light sources.

2. The device according to claim 1 wherein the dimmer apparatus (20) which modulates the light intensity of said first light source (6a) and at least said second light source (6b) is adjusted manually.

3. The device according to claim 1 wherein the dimmer apparatus (20) which modulates the light intensity of said first light source (6a) and at least said second light source (6b) is adjusted automatically by a software.

4. The device according to any of the preceding claims wherein each light source consists of multiple groups of LEDs.

5. The device according to claims 4 wherein each group of LEDs is modulated simultaneously to the other groups of LEDs in the same light source.

6. The device according to claims 4 wherein at least two groups of LEDs in the same light source are modulated in their intensity independently of each other.

7. The device according to claim 1 wherein the first light source (6a) and at least a second light source (6b) are combined with at least one optical element.

8. The device according to claim 7 wherein the optical element is a diffusion filter (8).

9. The device according to claim 7 wherein the optical element is a Fresnel lens.

10. The device according to claim 7 wherein the optical element is an elliptical reflector.

11. The device according to claim 1 wherein the said plane containing the optical axis (3) is orthogonal to the scanning plane.

12. The device according to claim 1 wherein the said plane containing the optical axis (3) is inclined with respect to the scanning plane.

## Patentansprüche

1. Belichtungseinrichtung für Bilddigitalisierungsscannergeräte, die mit mindestens einem Linear- oder Multilinearsensor (1) und einem optischen System (2) mit seiner optischen Achse (3) versehen sind, wobei die Einrichtung eine erste Lichtquelle (6a) aus LEDs und mindestens eine zweite Lichtquelle (6b) aus LEDs umfasst, die sich in einem Raum befinden, der durch eine Abtastebene begrenzt ist, die durch das abzutastende Objekt (5) und durch eine die optische Achse (3) enthaltende Ebene definiert wird, um einfallende Lichtstrahlen (7a, 7b) zu emittieren, die durch einen Satz von Strahlen gebildet werden, die auf einen aktiven Abtastbereich (4) der Abtastebene mit gegebenen Einfallswinkeln fallen, wobei die erste Lichtquelle (6a) durch eine Dimmervorrichtung (20) gesteuert wird, die die Lichtintensität der ersten Lichtquelle (6a) moduliert, **dadurch gekennzeichnet, dass** die mindestens zweite Lichtquelle (6b) durch die Dimmervorrichtung (20) gesteuert wird, so dass mehrere unterschiedliche Belichtungskonfigurationen im aktiven Abtastbereich (4) durch Modulation der Lichtintensität von mindestens den beiden Lichtquellen (6a, 6b) durch die Anwendung eines kombinierten, unabhängigen Dimmens einzelner Lichtquellen erreicht werden.

2. Einrichtung nach Anspruch 1, wobei die Dimmervorrichtung (20), die die Lichtintensität der ersten Lichtquelle (6a) und mindestens der zweiten Lichtquelle (6b) moduliert, manuell eingestellt wird.

3. Einrichtung nach Anspruch 1, wobei die Dimmervorrichtung (20), die die Lichtintensität der ersten Lichtquelle (6a) und mindestens der zweiten Lichtquelle (6b) moduliert, automatisch durch eine Software eingestellt wird.

4. Einrichtung nach einem der vorhergehenden Ansprüche, wobei jede Lichtquelle aus mehreren Gruppen von LEDs besteht.

5. Einrichtung nach Anspruch 4, wobei jede Gruppe von LEDs gleichzeitig zu den anderen Gruppen von LEDs in derselben Lichtquelle moduliert wird.

6. Einrichtung nach Anspruch 4, wobei mindestens zwei Gruppen von LEDs in derselben Lichtquelle unabhängig voneinander in ihrer Intensität moduliert werden.

7. Einrichtung nach Anspruch 1, wobei die erste Lichtquelle (6a) und mindestens eine zweite Lichtquelle (6b) mit mindestens einem optischen Element kombiniert sind.

8. Einrichtung nach Anspruch 7 wobei das optische Element ein Diffusionsfilter (8) ist.

9. Einrichtung nach Anspruch 7 wobei das optische Element eine Fresnel-Linse ist.

10. Einrichtung nach Anspruch 7, wobei das optische Element ein elliptischer Reflektor ist.

11. Einrichtung nach Anspruch 1, wobei die Ebene, die die optische Achse (3) enthält, orthogonal zur Abtastebene ist.

12. Einrichtung nach Anspruch 1, wobei die Ebene, die die optische Achse (3) enthält, in Bezug auf die Abtastebene geneigt ist.

## Revendications

1. Dispositif d'éclairage pour scanners de numérisation d'image étant pourvus d'au moins un capteur linéaire ou multilinéaire (1) et d'un système optique (2) avec son axe optique (3), le dispositif comprenant une première source lumineuse (6a) composée de DEL et au moins une seconde source lumineuse (6b) composée de DEL étant situées dans un espace délimité par un plan de balayage étant défini par l'objet (5) à scanner et par un plan contenant l'axe optique (3), de manière à émettre des faisceaux lumineux incidents (7a, 7b) formés par un ensemble de rayons, tombant sur une zone de balayage active (4) du plan de balayage, ayant des angles donnés d'incidence, la première source lumineuse (6a) étant commandée par un appareil gradateur (20) qui module l'intensité de la lumière de la première source lumineuse (6a), **caractérisé en ce que** ladite au moins seconde source lumineuse (6b) est commandée par ledit appareil gradateur (20) de sorte que plusieurs configurations différentes d'éclairage dans la zone de balayage active (4) soient accomplies par modulation de l'intensité de la lumière à partir des au moins deux sources lumineuses (6a, 6b) en appliquant une gradation indépendante combinée des sources lumineuses individuelles.

2. Dispositif selon la revendication 1, dans lequel l'appareil gradateur (20), qui module l'intensité de la lumière de ladite première source lumineuse (6a) et au moins de ladite seconde source lumineuse (6b), est réglé manuellement.

3. Dispositif selon la revendication 1, dans lequel l'appareil gradateur (20), qui module l'intensité de la lumière de ladite première source lumineuse (6a) et au moins de ladite seconde source lumineuse (6b), est réglé automatiquement par un logiciel.

4. Dispositif selon l'une quelconque des revendications précédentes, dans lequel chaque source lumineuse consiste en des groupes multiples de DEL.

5. Dispositif selon la revendication 4, dans lequel chaque groupe de DEL est modulé simultanément sur les autres groupes de DEL dans la même source lumineuse.

6. Dispositif selon la revendication 4, dans lequel au moins deux groupes de DEL dans la même source lumineuse sont modulés dans leur intensité séparément l'un de l'autre.

7. Dispositif selon la revendication 1, dans lequel la première source lumineuse (6a) et au moins une seconde source lumineuse (6b) sont combinées avec au moins un élément optique.

8. Dispositif selon la revendication 7, dans lequel l'élément optique est un filtre de diffusion (8).

9. Dispositif selon la revendication 7, dans lequel l'élément optique est une lentille de Fresnel.

10. Dispositif selon la revendication 7, dans lequel l'élément optique est un réflecteur elliptique.

11. Dispositif selon la revendication 1, dans lequel ledit plan contenant l'axe optique (3) est orthogonal au plan de balayage.

12. Dispositif selon la revendication 1, dans lequel ledit plan contenant l'axe optique (3) est incliné par rapport au plan de balayage.
